# EUROPEAN PATENT APPLICATION

(11) **EP 3 663 565 A1**
(43) Date of publication of application: **10.06.2020**
(21) Application number: 19213871.7
(22) Date of filing: 05.12.2019
(51) Int. Cl.: F02C 7/36, F16H 39/14, F16C 19/26, F16C 33/58

(54) **GEAR SHAFT ASSEMBLY FOR A HYDRAULIC UNIT**

(30) Priority: 07.12.2018 US 201816212984
(71) Applicant: Hamilton Sundstrand Corporation, Charlotte, NC 28217-4578 (US)
(72) Inventor: RITTMEYER, Gregory Alan, Winnebago, IL Illinois 61088 (US)
(74) Representative: Dehns

(57) **Abstract**

A gear shaft assembly for a hydraulic unit is disclosed which includes a gear shaft including a main body portion (52) having a central axis, an outer periphery (54), an inner periphery (56) and a medial region (58) extending between the outer periphery and the inner periphery, the inner periphery including an annular bearing surface that circumscribes a cylindrical cavity dimensioned to accommodate a roller bearing assembly, and an elongated axial shaft portion extending distally from the main body portion, and a roller bearing assembly arranged within the cylindrical cavity of the main body portion of the gear shaft and including a plurality of circumferentially arranged roller bearing elements in rolling contact with the annular bearing surface.

## Description

### BACKGROUND OF THE INVENTION

### 1. Field of the Invention

The subject invention is directed to an integrated drive generator, and more particularly, to a gear shaft of a hydraulic unit of an integrated drive generator used in aerospace applications.

### 2. Description of Related Art

Aircraft currently rely upon electrical, pneumatic and hydraulic systems for secondary power generation. A typical electrical system in an aircraft utilizes an integrated drive generator (IDG) coupled to a gas turbine engine to provide fixed frequency power to the power distribution system and to a variety of loads, as disclosed for example in commonly assigned U.S. Patent Application Publication 2016/0201697, the disclosure of which is incorporated herein by reference in its entirety.

An exemplary IDG includes a generator, a hydraulic unit and a differential assembly arranged in a common housing. The differential assembly is coupled to a gas turbine engine by way of an input shaft. The rotational speed of the input shaft varies during the operation of the gas turbine engine. The hydraulic unit cooperates with the differential assembly to provide a constant speed to the generator throughout the operating range of the engine.

Certain components of the hydraulic unit of the IDG, such as, for example, the roller bearings associated with rotating gear shafts have a limited operational life. For this reason, the gear shafts must be redesigned to increase the life of the roller bearings. The subject invention is directed to a redesigned gear shaft that accommodates a roller bearing assembly having an increased number of roller bearings, as compared to prior art roller bearing assemblies, thus increasing the life of the roller bearing assembly by approximately 20 percent.

### SUMMARY OF THE DISCLOSURE

The subject invention is directed to a new and useful gear shaft assembly for a hydraulic unit. The gear shaft assembly includes a gear shaft including a main body portion having a central axis, an outer periphery, an inner periphery and a medial region extending between the outer periphery and the inner periphery. The outer periphery of the main body portion of the gear shaft includes a plurality of circumferential gear teeth for meshing with another component of the hydraulic unit. The inner periphery of the main body portion of the gear shaft includes an annular bearing surface that circumscribes a cylindrical cavity dimensioned to accommodate a roller bearing assembly.

The gear shaft further includes an elongated axial shaft portion that extends distally from the main body portion of the gear shaft. A distal section of the axial shaft portion of the gear shaft includes a plurality of circumferential gear teeth for meshing with another component of the hydraulic unit.

The gear shaft assembly further includes a roller bearing assembly arranged within the cylindrical cavity of the main body portion of the gear shaft, which includes more than ten circumferentially arranged roller bearing elements that are in rolling contact with the annular bearing surface. Preferably, the cylindrical cavity of the main body portion of the gear shaft is dimensioned to accommodate a roller bearing assembly that includes twelve circumferentially arranged roller bearing elements.

The annular bearing surface of the main body portion of the gear shaft defines an outer race of the roller bearing assembly, and the roller bearing assembly includes an inner race having an end cap configured to be fastened to the hydraulic unit, so that the outer race of the roller bearing assembly rotates relative to the inner race of the roller bearing assembly.

In an embodiment of the gear shaft assembly of the subject invention, the annular bearing surface of the main body portion of the gear shaft has a diameter of approximately 1.96 inches, and the cylindrical cavity of the main body portion of the gear shaft includes a circumferential shoulder extending radially inwardly from the annular bearing surface for supporting the roller bearing elements and it has an inner diameter of approximately 1.81 inches. In addition, the annular bearing surface of the main body portion of the gear shaft is formed by an annular wall that has an outer diameter of approximately 2.22 inches, and the axial shaft portion of the gear shaft has a diameter of approximately 0.55 inches

The medial region of the main body portion of the gear shaft extends from the outer diameter of the annular wall to the outer periphery of the main body portion and a plurality of circumferentially spaced apart bore holes extend through the medial region to reduce the weight of the gear shaft. In an embodiment of the gear shaft assembly of the subject invention, the medial region of the main body portion of the gear shaft includes an odd number of circumferentially spaced apart bore holes for weight reduction, and in a preferred embodiment of the gear shaft assembly there are thirteen circumferentially spaced apart bore holes for weight reduction.

The subject invention is also directed to a hydraulic unit for an integrated drive generator, which includes a housing defining an interior chamber, a gear shaft disposed within the interior chamber of the housing and a roller bearing assembly arranged within the cylindrical cavity of the main body portion of the gear shaft.

The gear shaft of the hydraulic unit includes a main body portion having a central axis, an outer periphery, an inner periphery and a medial region extending between the outer periphery and the inner periphery. The outer periphery of the main body portion includes a plurality of circumferential gear teeth for meshing with another component of the hydraulic unit. The inner periphery of the main body portion including an annular bearing surface that circumscribes a cylindrical cavity dimensioned to accommodate a roller bearing assembly. The annular bearing surface defines an outer race of the roller bearing assembly. The medial region of the main body portion of the gear shaft extends from the outer diameter of the annular wall to the outer periphery of the main body portion and a plurality of circumferentially spaced apart bore holes extend through the medial region to reduce the weight of the gear shaft.

An elongated axial shaft portion extends distally from the main body portion of the gear shaft. A distal section of the axial shaft portion of the gear shaft includes a plurality of circumferential gear teeth for meshing with another component of the hydraulic unit.

The roller bearing assembly is arranged within the cylindrical cavity of the main body portion of the gear shaft and it includes twelve circumferentially arranged roller bearing elements and an inner race. The inner race has an end cap that is fastened to the housing of the hydraulic unit, so that the outer race of the roller bearing assembly rotates relative to the inner race of the roller bearing assembly.

These and other features of the subject invention will become more readily apparent to those having ordinary skill in the art to which the subject invention appertains from the detailed description of the preferred embodiments taken in conjunction with the following brief description of the drawings.

### BRIEF DESCRIPTION OF THE DRAWINGS

So that those having ordinary skill in the art will readily understand how to make and use the system components of the subject invention without undue experimentation, preferred embodiments thereof will be described in detail herein below with reference to the figures wherein:
Fig. 1 is a cross-sectional schematic view of an example of an integrated drive generator (IDG) used in conjunction with a gas turbine engine, which includes a hydraulic unit that contains the variable wobbler of the subject invention;
Fig. 2 is a perspective view of the hydraulic unit shown in Fig. 1, with the redesigned gear shaft of the subject invention separated therefrom for ease of illustration, along with the roller bearing assembly that is operatively associated therewith;
Fig. 3 is an exploded perspective view of the upper portion of the gear shaft shown in Fig. 2, with the roller bearings assembly separated therefrom for ease of illustration;
Fig. 4 is a top plan view of the redesigned gear shaft of the subject invention;
Fig. 5 is a cross-sectional view of the gear shaft taken along line 5-5 of Fig. 3; and
Fig. 6 is a localized view of the gear shaft as shown in Fig. 5;

### DETAILED DESCRIPTION OF THE PREFERRED EMBODIMENTS

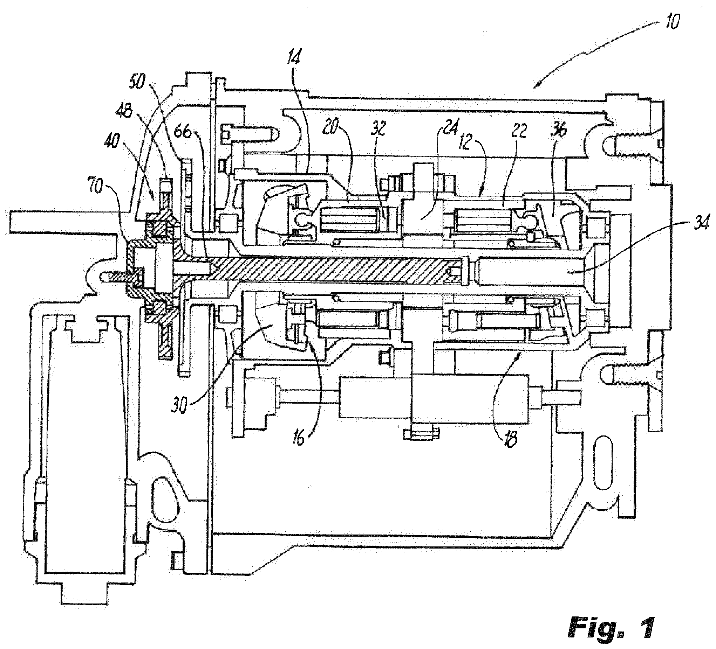

Referring now to the drawings wherein like reference numerals identify similar structural elements or features of the subject invention, there is illustrated in Fig. 1 an integrated drive generator (IDG) designated generally by reference numeral 10. The IDG 10 is designed to be coupled to the spool of a gas turbine engine through an accessory drive gearbox (not shown).

More particularly, the IDG 10 includes an input shaft that receives rotational drive from an accessory drive gearbox. The rotational speed of the input shaft varies depending upon the operation of the gas turbine engine. A hydraulic unit 12 housed within the IDG 10 cooperates with a differential assembly to convert the variable rotational speed of the input shaft to a fixed rotational output speed supplied to a generator.

With continuing reference to Fig. 1, the hydraulic unit 12 of the IDG 10 has a housing 14 that supports a variable displacement hydraulic pump 16 and a fixed displacement hydraulic motor 18. The pump 16 and motor 18 have respective cylinder blocks 20 and 22 which are arranged for rotation about a common axis within the housing 14 on opposite sides of a stationary port plate 24. The port plate 24 is formed with apertures to enable hydraulic fluid communication between the pump 16 and motor 18 and maintain a hydrostatic balance between the cylinder blocks 20 and 22, during normal operation of the hydraulic unit 12.

The operation of the hydraulic unit 12 in IDG 10 of an aircraft involves transmission of torque from a gas turbine engine of the aircraft to an input of the IDG, which rotates an input drive gear or gear shaft 50 of the hydraulic unit 12. The cylinder block 20 of the pump 16 is connected to the gear shaft 50 for rotation therewith. Pistons 32 within the cylinder block 20 of pump 16 are displaced during this rotation by an amount that is related to the position of a variable wobbler 30 of the pump 16. More particularly, the stroke of each piston 32 within cylinder block 20 depends upon the angular position of the variable wobbler 30 relative to the central axis of the hydraulic unit 12.

Hydraulic fluid under pressure from the pump 16 is delivered to the motor 18 through the port plate 24 to rotate the cylinder block 22 and an output shaft 34 to which it is fixedly connected. A fixed wobbler 36 is associated with the output shaft 34 so that the operating speed of the motor 18 is a function of the displacement of the pump 16.

The rotary output from shaft 34, which is coupled to gear shaft 48, is added to or subtracted from the rotary motion provided by the engine through the differential gearing of the IDG 10 so that the electrical generator will be operated at a substantially constant rotational speed. That is, since the rotational speed from the engine to the gear shaft 48 will vary, the position of the variable wobbler 30 is adjusted in response to the detected speed variations. This provides the necessary reduction or increase in speed, so as to obtain the desired constant output speed to the generator.

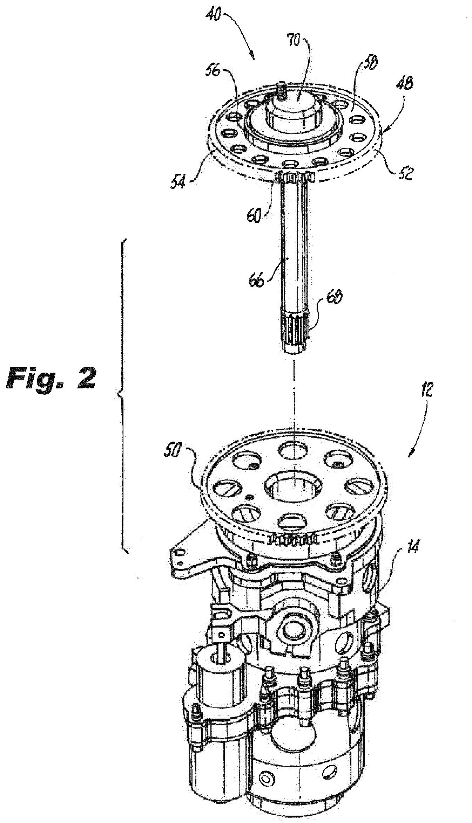

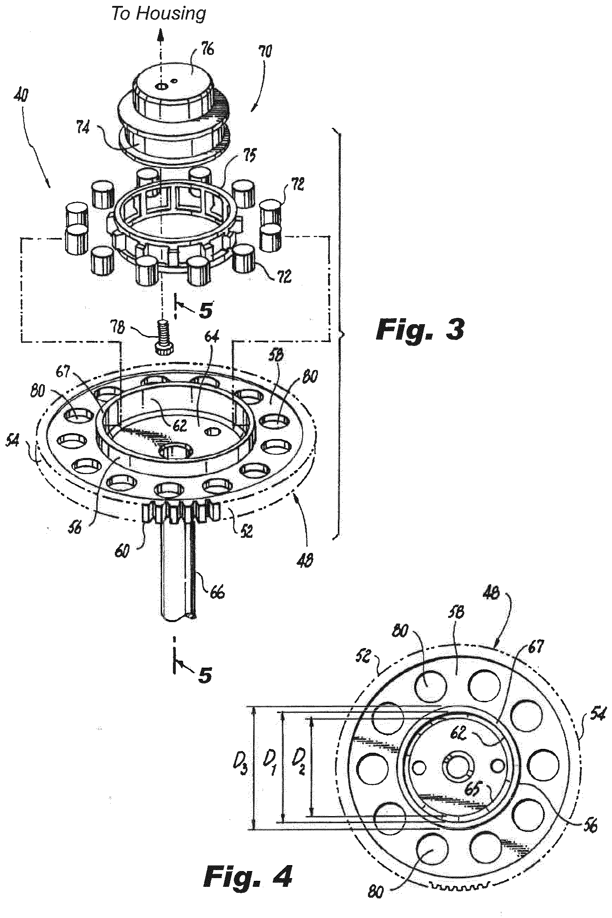

Referring now to Figs. 2 and 3, the input gear shaft 48 is shown separated from the hydraulic unit 12 and it is part of a gear shaft assembly 40 that also includes a roller bearing assembly 70, which will be discussed in greater detail below. The gear shaft 48 includes a main body portion 52 having a central axis, an outer periphery 54, an inner periphery 56 and a medial region 58 that extends between the outer periphery 54 and the inner periphery 56. The outer periphery 54 of the main body portion 52 of the gear shaft 48 includes a plurality of circumferential gear teeth 60 for meshing with the differential assmebly.

The gear shaft 48 further includes an elongated axial shaft portion 66 that extends distally from the main body portion 52 of the gear shaft 48. A distal section of the axial shaft portion 66 of the gear shaft 48 includes a plurality of circumferential gear teeth 68 for meshing with output shaft 34 of the hydraulic unit 12. As best seen in Fig. 3, the inner periphery 56 of the main body portion 52 of the gear shaft 48 includes an annular bearing surface 62 that circumscribes a cylindrical cavity 64 dimensioned to accommodate the roller bearing assembly 70.

Referring now Figs. 3 through 6, as noted above, the gear shaft assembly 40 further includes roller bearing assembly 70, which is arranged within the cylindrical cavity 64 of the main body portion 52 of the gear shaft 48. The roller bearing assembly 70 includes a plurality of circumferentially arranged roller bearing elements 72 that are supported in a cage 75 and are in rolling contact with the annular bearing surface 62 of the cylindrical cavity 64.

Preferably, the roller bearing assembly 70 includes more than ten circumferentially arranged roller bearing elements 72. More preferably, as best seen in Fig. 3, the roller bearing assembly 70 includes twelve circumferentially arranged roller bearing elements 72. Thus, the cylindrical cavity 64 of the main body portion 52 of the gear shaft 48 is dimensioned and configured to accommodate a roller bearing assembly 70 that includes twelve circumferentially arranged roller bearing elements 72.

This represents an improvement over the prior art, in that a roller bearing assembly associated with an input gear shaft of an prior hydraulic unit had ten roller bearing elements. By redesigning the gear shaft 48 and increasing the number of roller bearing elements from ten to twelve, the operational life of the roller bearing assembly 70 is increased. Indeed, it has been determined that by increasing the number of roller bearing elements in the roller bearing assembly from ten to twelve, the operational life of the redesigned roller bearing assembly 70 is increased by approximately 20 percent. This design change reduces the overhaul and maintenance costs associated with the hydraulic unit 12 in particular and the IDG 10 in general.

The annular bearing surface 62 of the main body portion 52 of the gear shaft 48 defines an outer race of the roller bearing assembly 70. The roller bearing assembly 70 also includes an inner race structure 74 having an end cap 76. The end cap 76 is configured to be fastened to the housing of the IDG 10 by a threaded fastener 78, as best seen in Fig. 1. Consequently, during normal operation, the outer race of the roller bearing assembly 70 (i.e., annular bearing surface 62) rotates relative to the inner race structure 74 of the roller bearing assembly 70.

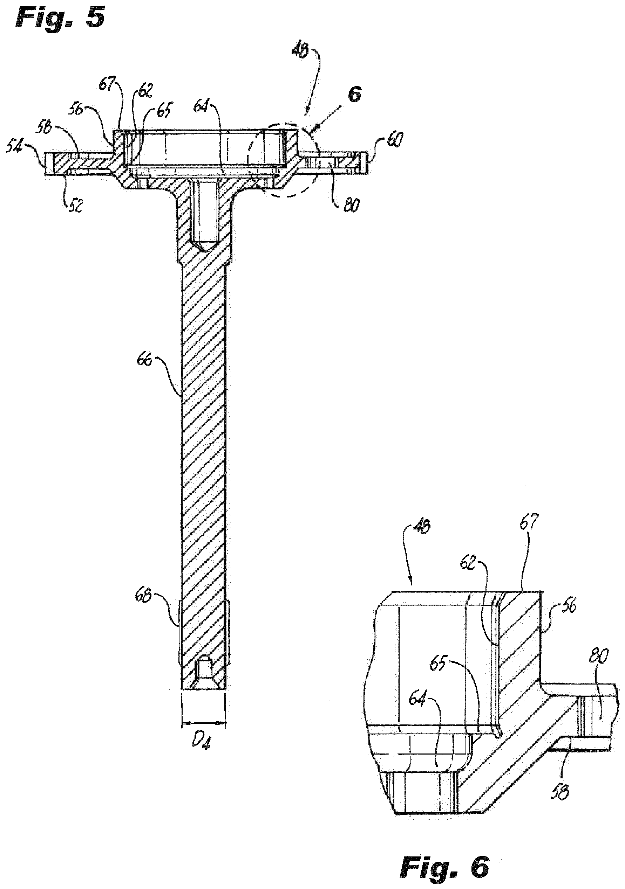

In an embodiment of the gear shaft assembly 40 of the subject invention, the annular bearing surface 62 of the main body portion of the gear shaft 48 has an inner diameter D₁ of approximately 1.96 inches, and the cylindrical cavity 64 of the main body portion 52 of the gear shaft 48 includes a circumferential shoulder 65 extending radially inwardly from the annular bearing surface 62 for supporting the roller bearing elements 72, which his best seen in Fig. 6. The shoulder 65 has an inner diameter D₂ of approximately 1.81 inches.

In addition, the annular bearing surface 62 of the main body portion 52 of the gear shaft 48 is formed by an annular wall 67 that has an outer diameter D₃ of approximately 2.22 inches, and the axial shaft portion 66 of the gear shaft 48 has an outer diameter D₄ of approximately 0.55 inches, as shown in Fig. 5.

As best seen in Fig. 4, the medial region 58 of the main body portion 52 of the gear shaft 48 extends from the outer diameter of the annular wall 67 to the outer periphery 54 of the main body portion 52 and a plurality of circumferentially spaced apart bore holes 80 extend through the medial region 58 to reduce the weight of the gear shaft 48. Preferably, the medial region 58 of the main body portion 52 of the gear shaft 48 includes an odd number of circumferentially spaced apart bore holes 80 for weight reduction, and in a preferred embodiment of the gear shaft assembly 40 there are thirteen circumferentially spaced apart bore holes 80 in the medial region 58 of the main body portion 52 of the gear shaft 48.

While the subject disclosure has been shown and described with reference to preferred embodiments, those skilled in the art will readily appreciate that changes and/or modifications may be made thereto without departing from the scope of the subject disclosure.

## Claims

1. A gear shaft assembly for a hydraulic unit comprising:
a) a gear shaft including a main body portion (52) having a central axis, an outer periphery (54), an inner periphery (56) and a medial region (58) extending between the outer periphery and the inner periphery, the inner periphery including an annular bearing surface that circumscribes a cylindrical cavity dimensioned to accommodate a roller bearing assembly, and an elongated axial shaft portion extending distally from the main body portion; and
b) a roller bearing assembly (70) arranged within the cylindrical cavity of the main body portion of the gear shaft and including more than ten circumferentially arranged roller bearing elements in rolling contact with the annular bearing surface.

2. A gear shaft assembly as recited in Claim 1, wherein the annular bearing surface of the main body portion of the gear shaft defines an outer race of the roller bearing assembly.

3. A gear shaft assembly as recited in Claim 2, wherein the roller bearing assembly includes an inner race having an end cap configured to be fastened to the hydraulic unit, so that the outer race rotates relative to the inner race.

4. A gear shaft assembly as recited in any preceding Claim, wherein the cylindrical cavity of the main body portion of the gear shaft is dimensioned to accommodate a roller bearing assembly that includes twelve circumferentially arranged roller bearing elements.

5. A gear shaft assembly as recited in any preceding Claim, wherein the annular bearing surface of cylindrical cavity of the main body portion of the gear shaft has a diameter of approximately 1.96 inches.

6. A gear shaft assembly as recited in Claim 5, wherein the cylindrical cavity of the main body portion of the gear shaft includes a circumferential shoulder extending radially inwardly from the annular bearing surface for supporting the roller bearing elements and having an inner diameter of approximately 1.81 inches.

7. A gear shaft assembly as recited in Claim 6, wherein the annular bearing surface of cylindrical cavity of the main body portion of the gear shaft is formed by an annular wall having an outer diameter of approximately 2.22 inches.

8. A gear shaft assembly as recited in any preceding Claim, wherein the medial region of the main body portion of the gear shaft extends from the outer diameter of the annular wall to the outer periphery of the main body portion and a plurality of circumferentially spaced apart bore holes extend through the medial region to reduce the weight of the gear shaft.

9. A gear shaft assembly as recited in any preceding Claim, wherein the outer periphery of the main body portion of the gear shaft includes a plurality of circumferential gear teeth.

10. A gear shaft assembly as recited in any preceding Claim, wherein a distal section of the axial shaft portion of the gear shaft includes a plurality of circumferential gear teeth.

11. A gear shaft as recited in any preceding Claim, wherein the axial shaft portion of the gear shaft has a diameter of approximately 0.55 inches.

12. A hydraulic unit for an integrated drive generator comprising:
a) a housing (14) defining an interior chamber;
b) the gear shaft assembly as recited in any preceding Claim, said gear shaft disposed within the interior chamber of the housing; and
c) said roller bearing assembly arranged within the cylindrical cavity of the main body portion of the gear shaft including twelve circumferentially arranged roller bearing elements and an inner race having an end cap fastened to the housing of the hydraulic unit, whereby the outer race of the roller bearing assembly rotates relative to the inner race of the roller bearing assembly.

13. A hydraulic unit as recited in Claim 12, wherein the medial region of the main body portion of the gear shaft extends from the outer diameter of the annular wall to the outer periphery of the main body portion and a plurality of circumferentially spaced apart bore holes extend through the medial region to reduce the weight of the gear shaft.

14. A hydraulic unit as recited in Claim 12or 13, wherein the outer periphery of the main body portion of the gear shaft includes a plurality of circumferential gear teeth.

15. A hydraulic unit as recited in any of Claims 12 to 14, wherein a distal section of the axial shaft portion of the gear shaft includes a plurality of circumferential gear teeth.
